# EUROPEAN PATENT SPECIFICATION

(11) **EP 4 481 011 B1**
(45) Date of publication and mention of the grant of the patent: **14.01.2026**
(21) Application number: 23181107.6
(22) Date of filing: 22.06.2023
(51) Int. Cl.: C09J 123/08, C08K 3/04, F16L 11/00, F16L 11/127, F16L 11/24

(54) **ANTISTATICALLY EQUIPPED POLYMER FOR FLEXIBLE HOSES**
ANTISTATISCH AUSGERÜSTETES POLYMER FÜR FLEXIBLE SCHLÄUCHE
POLYMÈRE ÉQUIPÉ DE MANIÈRE ANTISTATIQUE POUR TUYAUX SOUPLES

(43) Date of publication of application: 25.12.2024
(73) Proprietor: ContiTech Deutschland GmbH, 30175 Hannover (DE)
(72) Inventor: Brusa, Massimiliano, 30165 Hannover (DE); Wietzke, Steffen, 30165 Hannover (DE); Masri, Samer, 30165 Hannover (DE)
(74) Representative: Preusser, Andrea

(56) References cited:
- WO-A1-2011/051870
- WO-A1-2020/017009
- US-A1- 2018 231 152

## Description

The invention relates to a flexible hose, in particular a flexible vacuum cleaner hose, a process for preparing the flexible hose, and its use as a vacuum cleaner hose.

Flexible hoses made of plastic find use in a plurality of application fields. An important application field are vacuum cleaner hoses (e.g. WO2011/051870A1). Such flexible hoses often require an antistatic equipment in order to avoid the risk of electrostatic discharges. For instance, when fine particles are conveyed in a vacuum cleaner hose the friction of the particles on the walls of the hose can generate strong electrostatic charges. As a result, electrostatic discharges and even sparks can occur when the electrostatic charged hose contacts a grounded component or operator, which can lead to highly undesired events such as damages to devices, pain or health risk for the operator, inflaming of materials or explosions.

According to the prior art, there are antistatically equipped flexible hoses made of a spirally wound plastic profile where an extruded hot melt adhesive is employed to ensure the adhesion of the entire hose. The plastic profile includes electroconductive fillers such as electroconductive carbon black so that the wall of the hose becomes dissipative in order to provide the antistatic equipment. As a result, discharge of electricity along the dissipative wall of the hose is possible.

Antistatically equipped flexible coiled hoses of this type are commercially available such as FLEXOCOND^{®} series from CONTINENTAL.

However, some problems are associated with flexible hoses according to the prior art. Thus, the hot melt adhesive employed in such hoses is insulating so that only a discontinuous way of discharge is provided. The stability of electric performance shows room for improvement. In particular, in a state where the hose is in a bended or stretched state, the antistatic protection may significantly deteriorate. In addition, the dissipation property can suffer from deformation of the hose, e.g. due to repeated stretching or bending operation, during the service life, e.g. at least 2 years.

The object of the present invention is to provide an antistatically equipped flexible hose made of a spirally wound plastic profile that overcomes the drawbacks of the prior art. Specifically, the object of the present invention is to provide such a flexible hose having an improved antistatic property as compared to the prior art hoses. In particular, the flexible hose should exhibit a reduced deterioration of the antistatic property in a stretched state of the hose. A good antistatic property corresponds to a sufficiently low electrical resistance of the hose.

The object of the invention could be achieved in particular by incorporating electroconductive carbon black having specific properties into the hot melt adhesive employed in the flexible hose.

Accordingly, the present invention is directed to a flexible hose having a main body made of a spirally wound plastic profile wherein adjacent windings of the plastic profile partially overlap and are connected with each other by a hot melt adhesive interposed between the overlapping portions of adjacent windings, the plastic of the plastic profile is antistatically equipped and based on polyethylene and/or ethylene copolymer, and the hot melt adhesive is based on ethylene copolymer,
wherein the hot melt adhesive comprises electroconductive carbon black having a specific surface area of more than 90 m²/g, determined as STSA according to ASTM D6556-21 (external surface area, based on the statistical thickness method, nitrogen adsorption), and a Iodine adsorption number (IAN) of more than 100 g/kg, determined according to ASTM D1510-21.

Surprisingly, the flexible hose of the invention provided with the hot melt adhesive containing the specific electroconductive carbon black exhibits a lower surface resistivity as compared to flexible hoses with a hot melt adhesive used in the prior art. A big benefit of the inventive hose is not only a lower resistivity in an unstrained state but also the stability of the electric dissipation under strain such as in a stretched state as demonstrated in examples below.

The improved antistatic behavior can be achieved by only one macroscopically homogenous layer of hot melt adhesive, preferably based on polyethylene, containing specific conductive carbon black, which enables electric dissipation with a continuous percolation path ensuring the dissipation over lifetime. The antistatic path is also guaranteed if deformation of the hose occurs during the service life.

It was found that the specific electroconductive carbon black could be added to the hot melt adhesive up to level and dispersion quality that resistivity is low enough and viscosity meets the requirements for processing. This was surprising since incorporation of fillers into a hot melt adhesive usually impairs the properties of the hot melt adhesive so that processing is impaired or even not possible. For instance, the incorporation of filler may cause brittleness or occurrence of voids in the hot melt adhesive.

Some advantages of the invention may be summarized as follows:
- the hot melt adhesive can be obtained by a very simple recipe (two components, low processing efforts)
- one-layer solution with the hot melt adhesive for improved antistatic equipment
- decreased resistance
- stable level of resistance under deformation, e.g. stretching

In the following, the invention is described in more detail and preferred embodiments and examples are given.

The accompanying drawings show in:
Fig. 1 a detail of a cross-section in length direction of a comparative flexible hose.
Fig. 2 a detail of a cross-section in length direction of a flexible hose according to the invention.
Fig. 3 the flexible hose of Fig. 2 in a stretched state.
Fig. 4 a side view of the flexible hose of Fig. 2 together with a detailed view of a cross-section.

The hot melt adhesive employed in the inventive flexible hose is a hot melt adhesive based on ethylene copolymer. The hot melt adhesive may include one or more ethylene copolymers. The hot melt adhesive is generally a thermoplastic also called plastomer, in particular a polyolefin plastomer.

The ethylene copolymer of the hot melt adhesive is preferably at least one ethylene alpha olefin copolymer. The ethylene alpha olefin copolymer can include one or more alpha olefins. The ethylene copolymer can be one ethylene alpha olefin copolymer or a blend of two or more ethylene alpha olefin copolymers.

The alpha olefin can have e.g. from 3 to 20 carbon atoms. Examples of suitable alpha olefins are propene, 1-butene, 1-hexene, 1-octene, 4-methylpentene-1 or a combination thereof, wherein 1-octene is preferred. Examples of suitable ethylene alpha olefin copolymers are ethylene/1-butene copolymer, ethylene/1-hexene copolymer, ethylene/1-octene copolymer, ethylene/4-methylpentene-1 copolymer or a combination thereof.

It is preferred that the ethylene copolymer is or comprises ethylene 1-octene copolymer.

The amount of ethylene copolymer, preferably ethylene alpha olefin copolymer, in the hot melt adhesive may be for instance in the range of 40 to 100 % by weight, preferably 60 to 100 % by weight, based on the total amount of polymers in the hot melt adhesive.

The hot melt adhesive employed in the inventive flexible hose comprises electroconductive carbon black having the required properties as indicated below. Electroconductive carbon black also called conductive carbon black (CCB) is known to the skilled person and many different types are commercially available. The electroconductive carbon black contained in the hot melt adhesive can be one type of electroconductive carbon black or a blend of two ore more types of electroconductive carbon black having the required properties indicated below.

The electroconductive carbon black contained in the hot melt adhesive has a specific surface area of more than 90 m²/g. The specific surface area as indicated herein is determined as STSA according to ASTM D6556-21 (external surface area, based on the statistical thickness method, nitrogen adsorption). ASTM D6556-21 is the Standard Test Method for Carbon Black-Total and External Surface Area by Nitrogen Adsorption.

In addition, the electroconductive carbon black contained in the hot melt adhesive has a Iodine adsorption number (IAN) of more than 100 g/kg. The Iodine adsorption number as indicated herein is determined according to ASTM D1510-21.

For instance, in one embodiment the electroconductive carbon black contained in the hot melt adhesive has a specific surface area of more than 90 m²/g and a IAN of more than 120 g/kg. Particular good results can be achieved with an electroconductive carbon black having very high specific surface area and IAN, such as a specific surface area of more than 400 m²/g and a IAN of more than 300 g/kg. This may also enable the use of reduced amounts of electroconductive carbon black.

The amount of the electroconductive carbon black as specified above in the hot melt adhesive may be e.g. in the range 0.5 to 30 % by weight, preferably 1 to 25 % by weight, more preferably 1.5 to 20 % by weight. A particular suitable range is e.g. 5 to 20 % by weight.

The hot melt adhesive may further comprise electroconductive carbon filler other than those discussed above such as carbon black other than the electroconductive carbon black specified above, graphite, graphene, carbon nanotubes or a combination thereof.

The hot melt adhesive may comprise one or more further additives which are conventionally used in such hot melt adhesives. Examples of optional additives are waxes, such as paraffinic waxes or microcrystalline waxes, tackifiers, such as solid and/or liquid tackifiers, fillers, colorants, antioxidants, stabilizers or a combination thereof.

In a preferred embodiment, the hot melt adhesive has a melt flow index (MFI) in the range of 5 to 30 g/10 min, preferably 9 to 25 g/10 min or 10 to 25 g/10 min, more preferably 10 to 20 g/10 min, determined according to ISO 1133, 2.16 kg at 190°C.

In a preferred embodiment, the hot melt adhesive has a surface resistance of less than 1000 ohm, determined according to EN 60079-0, § 26.13 (23 °C, 30% r.h.).

The melt flow index and the surface resistance as indicated above relate to the hot melt adhesive as employed in the flexible hose of the invention, i.e. including the electroconductive carbon black. The melt flow index and the surface resistance as indicated above relate to the material of the hot melt adhesive as such.

The incorporation of electroconductive carbon black into a hot melt adhesive will decrease the MFI after compounding. Accordingly, it is to be considered that the selected hot melt adhesive has a suitable MFI before the incorporation of the carbon black. For instance, the hot melt adhesive before the incorporation of the carbon black may have a MFI of 25 to 35 g/10 min, determined according to ISO 1133, 2.16 kg at 190°C.

In a particular preferred embodiment, the hot melt adhesive has both the melt flow index (MFI) and the surface resistance in the ranges indicated above. It is a particular merit of the invention that the hot melt adhesive has viscosity properties which allow good processibility and at the same time provide sufficiently low resistivity for antistatic property which is achieved by the specific carbon black used.

The flexible hose of the invention has a main body mainly formed from a plastic profile. The plastic of plastic profile is based on polyethylene and/or ethylene copolymer. Thus, the plastic comprises polyethylene, ethylene copolymer or a combination thereof, preferably polyethylene.

In an embodiment, the plastic of the plastic profile comprises at least one ethylene copolymer.

In a particular preferred embodiment, the plastic of the plastic profile comprises a blend of polyethylene and at least one elastomer. The at least one elastomer may be a common elastomer as used in such blends.

In a particular preferred embodiment, the plastic of the plastic profile is a thermoplastic elastomer (TPE), in particular a thermoplastic polyolefin elastomer (TPO), preferably comprising a blend of polyethylene and at least one elastomer such as EPM, EPDM or a combination thereof. The plastic preferably comprises a thermoplastic matrix formed from polyethylene and a rubber phase dispersed in the thermoplastic matrix formed from the at least one elastomer.

It is generally preferred that the total amount of polyethylene and/or ethylene copolymer and, if present, elastomer in the plastic of the plastic profile is 60 to 100 % by weight, preferably 80 to 100 % by weight, based on the total amount of polymers in the plastic. In a preferred embodiment, the total amount of polyethylene and elastomer in the plastic of the plastic profile is 60 to 100 % by weight, preferably 80 to 100 % by weight, based on the total amount of polymers in the plastic.

The plastic of plastic profile is antistatically equipped. The antistatic equipment of the plastic can be built by certain measures to make the plastic electrically conductive. A preferred measure for the antistatic equipment is the incorporation of electroconductive fillers, e.g. electroconductive carbon fillers, into the plastic.

In a preferred embodiment, the plastic of the plastic profile comprises at least one electroconductive carbon filler as antistatic equipment, wherein the electroconductive carbon filler is preferably selected from carbon black, graphite, graphene, carbon nanotubes or a combination thereof, preferably carbon black.

In a particular preferred embodiment, the plastic comprises electroconductive carbon black as antistatic equipment. The amount of electroconductive carbon black in the plastic may be e.g. in the range of 15 to 30 % by weight, preferably 20 to 25 % by weight, based on the total weight of the plastic.

The plastic of the plastic profile may comprise one or more further additives which are conventionally used in such plastics. Examples of optional additives are colorants, fillers, antioxidants, stabilizers or a combination thereof.

The flexible hose of present invention has a main body made of the spirally wound plastic profile, wherein adjacent windings of the plastic profile partially overlap and are connected with each other by the hot melt adhesive interposed between the overlapping portions of adjacent windings. Such hose is also called coiled hose wound hose or spiral hose.

The hot melt adhesive between the overlapping portions of adjacent windings forms a layer between the overlapping portions. The hot melt adhesive layer may have a thickness e.g. in the range 0.2 to 0.8 mm.

The main body of the flexible hose usually has a wave-shaped cross-section in length direction, wherein the elevated portions may be designated as ribs. The recess portions between adjacent elevated portions are usually formed by a helical groove on the main body.

The plastic profile may have a thickness e.g. in the range of 0.3 to 1 mm.

In a preferred embodiment, the plastic profile is U-shaped. Preferably, the U-shape of the profile has an extension on one leg of the U so that a pocket is formed between said leg and the extension in which the other leg of the U can be inserted during winding of the profile.

The flexible hose may be constituted by the main body formed from the plastic profile and the hot melt adhesive or may comprise further components. For instance, the main body may be further equipped with a reinforcement.

The flexible hose is flexible in that it can be stretched in the length direction. The flexible hose can be also bended.

The flexible hose of the invention is preferably a vacuum cleaner hose. The vacuum cleaner may be a household vacuum cleaner or an industrial vacuum cleaner.

The present invention is also directed to a process for preparing a flexible hose according to the invention as described above, comprising
- mixing electroconductive carbon black having a specific surface area of more than 90 m²/g, determined as STSA according to ASTM D6556-21, and a Iodine adsorption number (IAN) of more than 100 g/kg, determined according to ASTM D1510-21, into a hot melt adhesive based on ethylene copolymer, to form the carbon-black-containing hot melt adhesive,
- applying the carbon-black-containing hot melt adhesive on a peripheral zone of a surface of the plastic profile,
- spirally winding the plastic profile with the applied hot melt adhesive around a mandrel, preferably a short mandrel, so that adjacent windings of the plastic profile partially overlap and the hot melt adhesive is interposed between the overlapping portions of adjacent windings, to form the flexible hose,
- cutting the flexible hose.

The mixing of the electroconductive carbon black into the hot melt adhesive can be carried out by any conventional means. It is preferred to mix the electroconductive carbon black into the hot melt adhesive by means of a twin-screw extruder to ensure a low-shear but still dispersive mixing. Due to the high surface and structure, these CCBs tend to agglomerate easily, which makes the compound more brittle and will need more CCB filler level because percolation is not reach efficiently. With such plastics compounding processing, a particular good distribution is reached, meaning distributed homogeneously to high extent on the macroscopic scale to get percolation at a relatively low level and likewise a certain level of agglomeration on the microscopic scale (contact between CCB particles) so that percolation paths are formed.

The carbon-black-containing hot melt adhesive is preferably applied by extruding on the peripheral zone of a surface of the plastic profile.

The present invention is also directed to a use of the flexible hose according to the invention as described above as a vacuum cleaner hose, such as a household vacuum cleaner hose or an industrial vacuum cleaner hose.

With respect to the method and the use of the invention, all indications given above for the flexible hose of the invention equally apply so that reference is made thereto.

The invention will be further explained by means of drawings and examples, which are however not intended to limit the invention in any way.

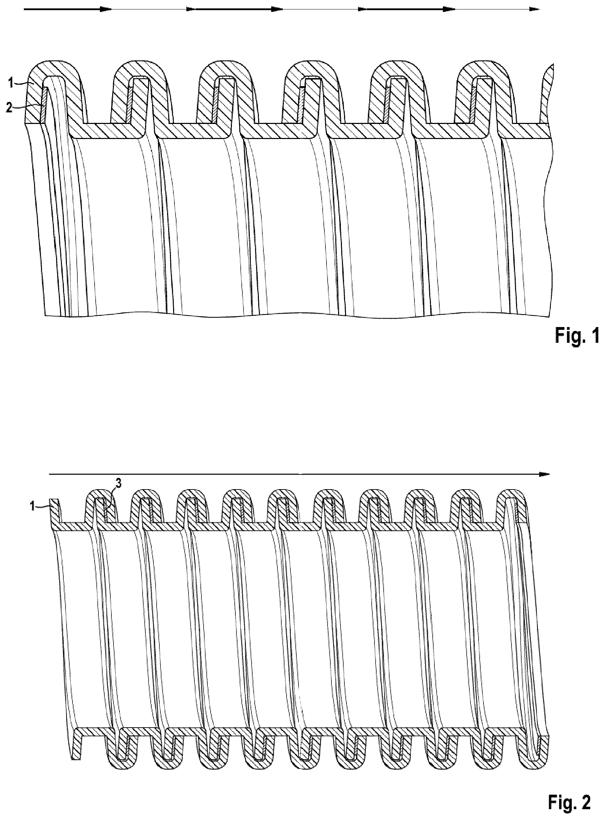

Fig. 1 shows a detail of a cross-section in length direction of a comparative flexible hose with a main body made of a spirally wound plastic profile 1 wherein adjacent windings of the plastic profile partially overlap and are connected with each other by a hot melt adhesive 2 interposed between the overlapping portions of adjacent windings of the profile. The hot melt adhesive is applied on a peripheral zone of a surface of the profile. The plastic profile is U-shaped, wherein the U-shape of the profile has an extension on one leg of the U so that a pocket is formed between said leg and the extension in which the other leg of the U is inserted. The hot melt adhesive is insulating so that only a discontinuous way of discharge is provided.

Fig. 2 shows a detail of a cross-section in length direction of a flexible hose according to the invention with a main body made of a spirally wound plastic profile 1 wherein adjacent windings of the plastic profile partially overlap and are connected with each other by a hot melt adhesive 3 interposed between the overlapping portions of adjacent windings of the profile. The hot melt adhesive is applied on a peripheral zone of a surface of the profile. The composition and design of the hose correspond to those of Fig. 1 except that the hot melt adhesive 3 contains electroconductive carbon black having a specific surface area of more than 90 m²/g, and a Iodine adsorption number (IAN) of more than 100 g/kg. The hot melt adhesive is dissipative and provides a continuous way of discharge.

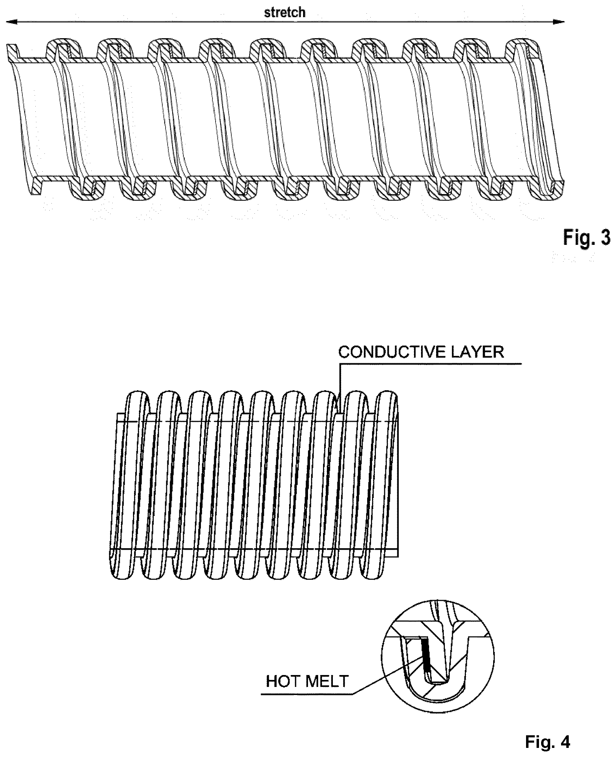

Fig. 3 shows the flexible hose of Fig. 2 in a stretched state.

Fig. 4 shows a side view of the flexible hose of Fig. 2 together with a detailed view of a cross-section showing the position of the hot melt adhesive.

### Examples

The following materials are used:

| | | |
|---|---|---|
| HMA | hot melt adhesive, polyolefin plastomer based on ethylene 1-octene copolymer | POE Queo^{®} 0230 (Borealis) |
| CCB1 | electroconductive carbon black | Ketjenblack^{®} EC 300J (AkzoNobel) |
| CCB2 | electroconductive carbon black | Ensaco^{®} 250 G (Imerys Timcal Graphite & Carbon) |
| CCB3 | Standard ASTM carbon black | N550 |
| CCB4 | Standard ASTM carbon black | N772 |
| PLA | plastic based on thermoplastic polyolefin elastomer comprising a blend of polyethylene and elastomer, antistatically equipped with conductive carbon black | |

The parameters of the electroconductive carbon black used are as follows:
Ketjenblack^{®} EC 300J: specific surface area is 800 m²/g, IAN = (740 ... 840) g/kg
Ensaco^{®} 250G: specific surface area is 65 m²/g, IAN = 160 g/kg
N550: specific surface area is 39 m²/g, IAN = 43 g/kg
N772: specific surface area is 30 m²/g, IAN = 32 g/kg.

### Comparative example 1

A flexible hose, FLEXOCOND^{®} P PLUS EX, is prepared having the design layout according to Fig. 1. The profile of the main body is made of plastic. The hot melt adhesive interposed between the overlapping portions of adjacent windings of the profile is HMA. The process of the invention is used to prepare the flexible hose except that the hot melt adhesive HMA is employed.

### Example 1

A hot melt adhesive containing CCB1 (HMA/CCB1) is prepared by incorporating CCB1 into hot melt adhesive HMA by means of a twin-screw extruder. The amount of CCB1 in the hot melt adhesive is 9 % by weight.

A flexible hose is prepared in the same way as in the Comparative example 1 except that the hot melt adhesive HMA is replaced by the prepared hot melt adhesive containing CCB1 (HMA/CCB1).

### Comparative example 2

A hot melt adhesive containing CCB2 (HMA/CCB2) is prepared by incorporating CCB2 into hot melt adhesive HMA by means of a twin-screw extruder. The amount of CCB2 in the hot melt adhesive is 18 % by weight.

A flexible hose is prepared in the same way as in the Comparative example 1 except that the hot melt adhesive HMA is replaced by the prepared hot melt adhesive containing CCB2 (HMA/CCB2).

### Comparative example 3

A hot melt adhesive containing CCB3 (HMA/CCB3) is prepared by incorporating CCB3 into hot melt adhesive HMA by means of a twin-screw extruder. The amount of CCB3 in the hot melt adhesive is 20 % by weight.

A flexible hose is prepared in the same way as in the Comparative example 1 except that the hot melt adhesive HMA is replaced by the prepared hot melt adhesive containing CCB3 (HMA/CCB3).

### Comparative example 4

A hot melt adhesive containing CCB4 (HMA/CCB4) is prepared by incorporating CCB4 into hot melt adhesive HMA by means of a twin-screw extruder. The amount of CCB4 in the hot melt adhesive is 20 % by weight.

A flexible hose is prepared in the same way as in the Comparative example 1 except that the hot melt adhesive HMA is replaced by the prepared hot melt adhesive containing CCB4 (HMA/CCB4).

### Mechanical and electrical performance tests for hot melt adhesives prepared

Mechanical and electrical performance of the prepared dissipative hot melt adhesives containing CCB1 (HMA/CCB1), CCB2 (HMA/CCB2), CCB3 (HMA/CCB2) and CCB4 (HMA/CCB4), respectively, are tested. The melt flow index and the surface resistance are determined according to the methods indicated above. The results are shown in the table below.

| Recipe | HMA/CCB1 | HMA/CCB2 | HMA/CCB3 | HMA/CCB4 |
|---|---|---|---|---|
| MFI (190°C, 2.16 kg) (g/10 min) | 10 | 6 | 8.50 | 15.34 |
| surface resistance (ohm)** | 110 | 280 | 40 | 2600 |
| hardness Shore D | 47±3 | 47±3 | n.d.* | n.d.* |
| density (g/cm³) | 0.93±0.03 | 0.97±0.03 | n.d.* | n.d.* |
| tensile strength at break (MPa) | ≥ 8.5 | ≥ 7 | n.d.* | n.d.* |

| | | | | |
|---|---|---|---|---|
| * n.d. = not determined ** < 10⁴ ohm is the general limit for dissipative compounds with carbon black | | | | |

The sample with CCB1 performs better in terms of viscosity (MFI), static surface resistance, tensile strength. The sample with CCB4 is suitable in terms of viscosity (MFI), but the surface resistance is too high and hence not applicable. While the surface resistance for the samples with CCB1, CCB2 and CCB3 are within a suitable range, from these samples only the sample with CCB1 provides a feasible processability in terms of viscosity (MFI).

### Dynamical mechanical performance tests on flexible hoses

Dynamical mechanical performance tests are performed on the flexible hoses of Example 1 and Comparative example 2 (FLEXOCOND^{®} P PLUS EX prepared with the hot melt adhesives containing CCB1 (HMA/CCB1) and CCB2 (HMA/CCB2), respectively).

A flexible hose with a similar design layout and composition as FLEXOCOND^{®} P PLUS EX, namely FLEXOCOND^{®} P PLUS EL, was also prepared with the hot melt adhesives containing CCB1 (HMA/CCB1) and CCB2 (HMA/CCB2), respectively. These examples are designated Example 2 and Comparative example 5 and are also subjected to dynamical mechanical performance tests.

The dynamical mechanical performance test effected is a bending test according to IEC 60312-1. The results are shown in the table below.

| | |
|---|---|
| | Result of bending test according to IEC 60312-1 |
| Example 1 | OK after > 40 000 cycles |
| Comparative example 2 | OK after > 40 000 cycles |
| Example 2 | OK after > 40 000 cycles |
| Comparative example 5 | OK after > 40 000 cycles |

The results exhibit that the inventive flexible hoses have a satisfactory dynamical mechanical performance.

### Antistatic performance test of the flexible hoses prepared

The flexible hoses of Comparative Examples 1 and 2 and Example 1 are tested for electrical resistance. The test is performed with metallic taps and clamps according to ISO 8031. Two fittings are used as electrodes and each is fixed on the ends of the hose, spaced apart by 1 meter in the unstretched state of the hose. The resistance is determined in the unstretched state and in two stretched states in length direction (10% stretched and 20% stretched).

| | Electrical surface resistance of the hose (kOhm per m hose) | | |
|---|---|---|---|
| Hose | Not stretched | 10% stretched | 20% stretched |
| Comparative example 1 | 16.6 | 28 | 100 |
| Example 1 | 8.4 | 9.8 | 11 |
| Comparative example 2 | 11.8 | 14.4 | 20.6 |

The results confirm a continuous way of discharge in the inventive example. The inventive example shows an improvement by a lowered resistance in the unstretched state. In particular, as compared to the comparative examples, the inventive example exhibits a remarkable stability of electric dissipation under strain, measured by the electrical resistance of the hose stretched to 10% and 20%.

### Reference list:

- 1: plastic profile
- 2: hot melt adhesive without electroconductive carbon black
- 3: hot melt adhesive containing electroconductive carbon black

## Claims

1. A flexible hose having a main body made of a spirally wound plastic profile
wherein adjacent windings of the plastic profile partially overlap and are connected with each other by a hot melt adhesive interposed between the overlapping portions of adjacent windings, the plastic of the plastic profile is antistatically equipped and based on polyethylene and/or ethylene copolymer, and the hot melt adhesive is based on ethylene copolymer,
wherein the hot melt adhesive comprises electroconductive carbon black having a specific surface area of more than 90 m²/g, determined as STSA according to ASTM D6556-21, and a Iodine adsorption number (IAN) of more than 100 g/kg, determined according to ASTM D1510-21.

2. The flexible hose according to claim 1,
wherein the hot melt adhesive has a melt flow index (MFI) in the range of 5 to 30 g/10 min, preferably 9 to 25 g/10 min or 10 to 25 g/10 min, more preferably 10 to 20 g/10 min, determined according to ISO 1133, 2.16 kg at 190°C, and/or
wherein the hot melt adhesive has a surface resistance of less than 1000 ohm, determined according to EN 60079-0.

3. The flexible hose according to any one of the preceding claims, wherein the amount of the electroconductive carbon black in the hot melt adhesive is 0.5 to 30 % by weight, preferably 1 to 25 % by weight, more preferably 1.5 to 20 % by weight, e.g. 5 to 20 % by weight.

4. The flexible hose according to any one of the preceding claims, wherein the ethylene copolymer of the hot melt adhesive is at least one ethylene alpha olefin copolymer, wherein the ethylene copolymer preferably is or comprises ethylene 1-octene copolymer.

5. The flexible hose according to any one of the preceding claims, wherein the amount of ethylene copolymer, preferably ethylene alpha olefin copolymer, in the hot melt adhesive is 40 to 100 % by weight, preferably 60 to 100 % by weight, based on the total amount of polymers in the hot melt adhesive.

6. The flexible hose according to any one of the preceding claims,
wherein the plastic of the plastic profile comprises a blend of polyethylene and at least one elastomer, and/or
wherein the plastic of the plastic profile comprises at least one ethylene copolymer.

7. The flexible hose according to any one of the preceding claims, wherein the plastic of the plastic profile is a thermoplastic elastomer (TPE), in particular a thermoplastic polyolefin elastomer (TPO), preferably comprising a blend of polyethylene and at least one elastomer.

8. The flexible hose according to any one of the preceding claims, wherein the total amount of polyethylene and/or ethylene copolymer and, if present, elastomer, preferably polyethylene and elastomer, in the plastic of the plastic profile is 60 to 100 % by weight, preferably 80 to 100 % by weight, based on the total amount of polymers in the plastic.

9. The flexible hose according to any one of the preceding claims, wherein the plastic of the plastic profile comprises at least one electroconductive carbon filler as antistatic equipment, wherein the electroconductive carbon filler is preferably selected from carbon black, graphite, graphene, carbon nanotubes, carbon nanotubes or a combination thereof, preferably carbon black.

10. The flexible hose according to any one of the preceding claims,
wherein the main body has a wave-shaped cross-section in length direction, and/or
wherein the plastic profile is U-shaped.

11. The flexible hose according to any one of the preceding claims, wherein the main body is equipped with a reinforcement.

12. The flexible hose according to any one of the preceding claims, wherein the flexible hose is a vacuum cleaner hose.

13. A process for preparing a flexible hose according to any one of the preceding claims, comprising
- mixing electroconductive carbon black having a specific surface area of more than 90 m²/g, determined as STSA according to ASTM D6556-21, and a Iodine adsorption number (IAN) of more than 100 g/kg, determined according to ASTM D1510-21, into a hot melt adhesive based on ethylene copolymer, preferably by means of a twin-screw extruder, to form the carbon-black-containing hot melt adhesive,
- applying the carbon-black-containing hot melt adhesive on a peripheral zone of a surface of the plastic profile, preferably by extruding,
- spirally winding the plastic profile with the applied hot melt adhesive around a mandrel, preferably a short mandrel, so that adjacent windings of the plastic profile partially overlap and the hot melt adhesive is interposed between the overlapping portions of adjacent windings, to form the flexible hose,
- cutting the flexible hose.

14. Use of the flexible hose according to any one of claims 1 to 12 as a vacuum cleaner hose.

## Patentansprüche

1. Ein flexibler Schlauch mit einem Hauptkörper aus einem spiralförmig gewickelten Kunststoffprofil, bei dem benachbarte Wicklungen des Kunststoffprofils teilweise überlappen und verbunden sind untereinander durch einen Heißschmelzkleber, der zwischen den überlappenden Teilen benachbarter Wicklungen eingefügt ist, der Kunststoff des Kunststoffprofils ist antistatisch ausgestattet und basiert auf Polyethylen und/oder Ethylenkopolymer, und der Heißschmelzklebstoff basiert auf einem Ethylenkopolymer, wobei der Heißschmelzklebstoff aus elektroleitfähigem Kohlenschwarz mit einem
spezifische Oberfläche von mehr als 90 m²/g, bestimmt als STSA gemäß ASTM D6556-21, und eine Jodadsorptionsnummer (IAN) von mehr als 100 g/kg, bestimmt gemäß ASTM D1510-21.

2. Der flexible Schlauch gemäß Anspruch 1,
, wobei der Heißschmelzklebstoff einen Schmelzflussindex (MFI) im Bereich von 5 bis 30 g/10 min, vorzugsweise 9 bis 25 g/10 min oder 10 bis 25 g/10 min, vorzugsweise 10 bis 20 g/10 min, bestimmt gemäß ISO 1133, 2,16 kg bei 190°C, und/oder wobei der Heißschmelzklebstoff einen Oberflächenwiderstand von weniger als 1000 Ohm hat, bestimmt gemäß EN 60079-0.

3. Der flexible Schlauch entspricht einem der vorangegangenen Ansprüche, bei dem der Anteil des elektroleitenden Kohlenstoffs im Heißschmelzklebstoff 0,5 bis 30 % nach Gewicht beträgt, vorzugsweise 1 bis 25 % nach Gewicht, eher 1,5 bis 20 % nach Gewicht, z. B. 5 bis 20 % nach Gewicht.

4. Der flexible Schlauch gemäß einem der vorangegangenen Ansprüche, bei dem das Ethylenkopolymer des Heißschmelzadhäbstoffs mindestens ein
Ethylen-Alpha-Olefin-Copolymer ist, wobei das Ethylenkopolymer vorzugsweise Ethylen ist oder daraus besteht
1-Okten-Copolymer.

5. Der flexible Schlauch entspricht einer der vorangegangenen Behauptungen, wobei die Menge an Ethylen-Copolymer, vorzugsweise Ethylen-Alpha-Olefin-Copolymer, im Heißschmelzklebstoff 40 bis 100 % nach Gewicht beträgt, vorzugsweise 60 bis 100 % nach Gewicht, basierend auf der Gesamtmenge der Polymere im Heißschmelzklebstoff.

6. Der flexible Schlauch gemäß einem der vorangegangenen Ansprüche, bei dem der Kunststoff des Kunststoffprofils aus einer Mischung aus Polyethylen und mindestens einem Elastomer besteht und/oder bei dem der Kunststoff des Kunststoffprofils aus mindestens einem Ethylencopolymer besteht.

7. Der flexible Schlauch gemäß einer der vorangegangenen Ansprüche, wobei der Kunststoff des Kunststoffprofils ein thermoplastisches Elastomer (TPE) ist, insbesondere ein thermoplastisches Polyolefin-Elastomer (TPO), vorzugsweise aus einer Mischung aus Polyethylen und mindestens einem Elastomer.

8. Der flexible Schlauch entspricht einem der vorangegangenen Ansprüche, bei dem die Gesamtmenge an Polyethylen und/oder Ethylencopolymer und, falls vorhanden, Elastomer, vorzugsweise Polyethylen und Elastomer, im Kunststoffprofil 60 bis 100 % nach Gewicht beträgt, vorzugsweise 80 bis 100 % nach Gewicht, basierend auf der Gesamtmenge von Polymere im Kunststoff.

9. Der flexible Schlauch gemäß einer der vorangegangenen Behauptungen, bei dem der Kunststoff des Kunststoffprofils mindestens einen elektroleitenden Kohlenstofffüller als antistatisches Gerät umfasst, wobei der elektroleitfähige Kohlenstofffüller vorzugsweise ausgewählt aus Schwarzkohle, Graphit, Graphen, Kohlenstoffnanoröhren, Kohlenstoffnanoröhren oder einer Kombination davon, vorzugsweise Schwarzkohle.

10. Der flexible Schlauch gemäß einer der vorherigen Behauptungen, bei dem der Hauptkörper einen wellenförmigen Querschnitt in Längenrichtung aufweist, und/oder
, bei dem das Kunststoffprofil U-förmig ist.

11. Der flexible Schlauch gemäß einem der vorherigen Ansprüche, bei dem der Hauptkörper mit einer Verstärkung ausgestattet ist.

12. Der flexible Schlauch gemäß einem der vorangegangenen Behauptungen, wobei der flexible Schlauch ein Staubsaugerschlauch ist.

13. Ein Verfahren zur Herstellung eines flexiblen Schlauchs gemäß einem der vorangegangenen Ansprüche, bestehend aus
- Mischung von elektroleitfähigem Schwarzkohl mit einer spezifischen Oberfläche von mehr als 90 m² /g, bestimmt als STSA gemäß ASTM D6556-21, und einer Jodansorptionszahl (IAN) von mehr als 100 g/kg, bestimmt gemäß ASTM D1510-21, in einen Heißschmelzklebstoff auf Basis eines Ethylenkopolymers, vorzugsweise mittels eines Doppelschneckenextruders, um die kohlenstoffschwarzhaltige Heißschmelze zu bilden
Klebstoff, indem der kohlenstoffschwarzhaltige Heißschmelzkleber auf eine periphere Zone
- einer Oberfläche des Kunststoffprofils aufgetragen wird, vorzugsweise durch Pressen, spiralförmiges Wickeln des Kunststoffprofils mit dem aufgetragenen Heißschmelzkleber um
- einen Dorn, vorzugsweise einen kurzen Dorn, sodass benachbarte Wicklungen des Kunststoffprofils teilweise überlappen und der Heißschmelzkleber zwischen den überlappenden Teilen der benachbarten Wicklungen eingefügt wird, um den flexiblen Schlauch zu formen, den flexiblen Schlauch zu schneiden.

14. Verwendung des flexiblen Schlauchs gemäß einem der Behauptungen 1 bis 12 als Staubsaugerschlauch.

## Revendications

1. Un tuyau flexible avec un corps principal fait d'un profil plastique spiralé où les enroulements
adjacents du profil plastique se chevauchent partiellement et sont connectés entre eux par un adhésif thermofusible interposé entre les parties superposées des enroulements adjacents, le plastique du profil plastique est équipé de façon antistatique et basé sur du polyéthylène et/ou du copolymère d'éthylène, et l'adhésif thermofusible est basé sur un copolymère d'éthylène, où l'adhésif thermofusible est composé d'un noir de carbone électroconducteur possédant un
surfaces spécifiques de plus de 90 m²/g, déterminées comme STSA selon ASTM D6556-21, et un nombre d'adsorption d'iode (IAN) supérieur à 100 g/kg, déterminé selon ASTM D1510-21.

2. Le tuyau flexible selon la revendication 1,
, où l'adhésif thermofusible a un indice de flux de fusion (MFI) compris entre 5 et 30 g/10 min, de préférence 9 à 25 g/10 min ou 10 à 25 g/10 min, de préférence 10 à 20 g/10 min, déterminé selon l'ISO 1133, 2,16 kg à 190°C, et/ou lorsque l'adhésif thermofusible a une résistance de surface inférieure à 1000 ohms, déterminée selon la norme EN 60079-0.

3. Le tuyau flexible, selon l'une des affirmations précédentes, où la quantité de noir de carbone électroconducteur dans l'adhésif thermofusible est de 0,5 à 30 % en poids, de préférence de 1 à 25 % en poids, de préférence de 1,5 à 20 % en poids, par exemple de 5 à 20 % en poids.

4. Le tuyau flexible selon l'une des affirmations précédentes, où le copolymère d'éthylène de l'adhésif thermofusible est au moins un copolymère d'alpha-oléfine d'éthylène, où le copolymère d'éthylène est de préférence ou comprend de l'éthylène
Copolymère 1-octène.

5. Le tuyau flexible selon l'une des affirmations précédentes, où la quantité de copolymère d'éthylène, de préférence copolymère d'alpha-oléfine d'éthylène, dans l'adhésif thermofusible est de 40 à 100 % en poids, de préférence de 60 à 100 % en poids, selon la quantité totale de polymères dans l'adhésif thermofusible.

6. Le tuyau flexible selon l'une des revendications précédentes, où le plastique du profil plastique comprend un mélange de polyéthylène et d'au moins un élastomère, et/ou où le plastique du profil plastique comprend au moins un copolymère d'éthylène.

7. Le tuyau flexible selon l'une des affirmations précédentes, dans lequel le plastique du profil plastique est un élastomère thermoplastique (TPE), en particulier un élastomère polyoléfine thermoplastique (TPO), de préférence composé d'un mélange de polyéthylène et d'au moins un élastomère.

8. Le tuyau flexible selon l'une des affirmations précédentes, où la quantité totale de polypolymère de polyéthylène et/ou d'éthylène et, si présent, d'élastomère, de préférence polyéthylène et élastomère, dans le plastique du profil plastique est de 60 à 100 % en poids, de préférence 80 à 100 % en poids, selon la quantité totale de polymères dans le plastique.

9. Le tuyau flexible selon l'une des affirmations précédentes, où le plastique du profil plastique comprend au moins un remplissage électroconducteur de carbone comme équipement antistatique, où le remplissage électroconducteur est de préférence
sélectionnés parmi le noir de carbone, le graphite, le graphène, les nanotubes de carbone,
les nanotubes de carbone ou une combinaison des deux, de préférence du noir de carbone.

10. Le tuyau flexible selon l'une des revendications précédentes, où le corps principal présente une section transversale en forme d'onde dans la direction de la longueur, et/ou
où le profil plastique est en forme de U.

11. Le tuyau flexible selon l'une des revendications précédentes, dans lequel le corps principal est équipé d'un renfort.

12. Le tuyau flexible selon l'une des revendications précédentes, où le tuyau flexible est un tuyau d'aspirateur.

13. Un procédé de préparation d'un tuyau flexible selon l'une des revendications précédentes, comprenant
- mélange de noir de carbone électroconducteur d'une surface spécifique supérieure à 90 m²/g, déterminé comme STSA selon ASTM D6556-21, et un nombre d'adsorption d'iode (IAN) supérieur à 100 g/kg, déterminé selon ASTM D1510-21, dans un adhésif thermofusible à base de copolymère d'éthylène, de préférence au moyen d'un extrudeur à double vis, pour former le liquide chaud contenant du noir de carbone
Adhésif, appliquant l'adhésif thermofusible contenant du noir de carbone sur une zone
- périphérique d'une surface du profil plastique, de préférence en extrudant, puis en enroulant en spirale le profil plastique avec l'adhésif thermofusible appliqué autour
- d'un mandrin, de préférence un mandron court, de sorte que les enroulements adjacents du profil plastique se chevauchent partiellement et que l'adhésif thermofusible soit intercalé entre les parties superposées des enroulements
- adjacents, pour former le tuyau flexible, couper le tuyau flexible.

14. Utilisation du tuyau flexible selon l'une des revendications 1 à 12 comme tuyau d'aspirateur.
